(19) **Europäisches Patentamt / European Patent Office / Office européen des brevets**

(11) **EP 4 738 513 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
H01M 10/0562 (2010.01)    H01M 10/0569 (2010.01)
C01B 25/14 (2006.01)    C01B 17/20 (2006.01)

(21) Application number: 25827230.1

(22) Date of filing: 04.04.2025

(52) Cooperative Patent Classification (CPC):
C01B 17/20; C01B 25/14; H01M 10/0562;
H01M 10/0569; Y02E 60/10

(86) International application number:
PCT/KR2025/004526

(87) International publication number:
WO 2026/005217 (02.01.2026 Gazette 2026/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.06.2024 KR 20240084012

(71) Applicant: Enflow Co., Ltd.
Suwon-si, Gyeonggi-do 16677 (KR)

(72) Inventors:
• JEONG, Nam Yeong
Sejong 30099 (KR)
• LIM, Hyun Taek
Yongin-si, Gyeonggi-do 16861 (KR)

• YOO, Su Jeong
Suwon-si, Gyeonggi-do 16684 (KR)
• LEE, Song Hee
Suwon-si, Gyeonggi-do 16514 (KR)
• LEE, Ji Woon
Hwaseong-si, Gyeonggi-do 18486 (KR)
• CHOI, Jung Sik
Suwon-si, Gyeonggi-do 16507 (KR)
• KIM, Hong Seok
Seongnam-si, Gyeonggi-do 13629 (KR)
• RYU, Kwang Hyun
Goyang-si, Gyeonggi-do 10361 (KR)

(74) Representative: Isarpatent
Patent- und Rechtsanwälte PartG mbB
Friedrichstraße 31
80801 München (DE)

(54) **SULFIDE ELECTROLYTE PREPARATION METHOD**

(57) The present invention relates to a method of preparing a sulfide electrolyte. According to one aspect of the present invention, a method of preparing a sulfide electrolyte of the present invention includes: a moisture control step of controlling the moisture content in a solvent; a step of preparing a precursor solution by stirring a precursor and the solvent with the controlled moisture content; and a powder synthesis step of synthesizing electrolyte powder using the precursor solution.

FIG. 1

EP 4 738 513 A1

**Description**

[Technical Field]

The present invention relates to a method of preparing a sulfide electrolyte, and more particularly, to a method of preparing a sulfide electrolyte for all-solid-state batteries.

[Background Art]

Lithium-ion secondary batteries are currently used not only in small electronic devices but also in medium- to large-sized devices such as electric vehicles, demonstrating a wide range of applications.

Currently, extensive research is being conducted to increase the energy density and safety of lithium-ion secondary batteries. However, problems such as battery explosions and fires caused by excessive increases in energy density in high-voltage batteries continue to arise. To resolve these problems, active research is being conducted on all-solid-state batteries that utilize solid electrolytes, which offer superior heat resistance and durability compared to liquid electrolytes.

Solid electrolytes include oxide-, sulfide-, and polymer-based solid electrolytes. Sulfide-based solid electrolytes have the highest ionic conductivity and offer process advantages, so extensive research is being conducted thereon.

Methods of preparing solid electrolytes include solid-phase methods and liquid-phase methods.

The solid-phase methods involve mixing solid starting materials using a ball mill or mixer, followed by heat treatment at high temperatures to synthesize electrolyte powder. However, controlling the particle size of the solid electrolyte is difficult, and therefore, the resulting particle size may not be uniform and ionic conductivity may be reduced.

In the liquid-phase methods, solid electrolytes are prepared by dissolving various starting materials in a solvent and then synthesizing electrolyte powder through solubility reduction or hydrolysis-condensation reactions. However, the liquid-phase methods leave residual solvents during the preparation process, and some raw materials may be diluted by the residual solvent, affecting the ionic conductivity of the solid electrolytes.

Therefore, the development of solid electrolyte preparation techniques that overcome the limitations of both the solid-phase and liquid-phase methods is required.

Meanwhile, the above-mentioned background technology represents technical information possessed by the present inventors for the purpose of developing the present invention or acquired during the process of developing the present invention, and therefore, it may not necessarily be considered publicly known technology prior to the filing of the application of the present invention.

[Disclosure]

[Technical Problem]

An object of one embodiment of the present invention is to provide a method of preparing a sulfide electrolyte having a low impurity content and high ionic conductivity.

[Technical Solution]

As a technical means for achieving the above-described technical task, according to one aspect of the present invention, a method of preparing a sulfide electrolyte includes: a moisture control step of controlling the moisture content in a solvent; a step of preparing a precursor solution by stirring a precursor and the solvent with the controlled moisture content; and a powder synthesis step of synthesizing electrolyte powder using the precursor solution.

According to another aspect of the present invention, the moisture control step may include: a first moisture control step of controlling moisture in a first solvent including an aprotic solvent; and a second moisture control step of controlling moisture in a second solvent including a protic solvent.

According to still another aspect of the present invention, in the first moisture control step, the moisture content in the first solvent may be controlled to 135 ppm or less.

According to yet another aspect of the present invention, in the second moisture control step, the moisture content in the second solvent is controlled to 35 ppm or less.

According to yet another aspect of the present invention, the aprotic solvent may include at least one selected from the group consisting of acetonitrile, tetrahydrofuran, hexane, acetone, dimethyl ether, and ethyl acetate.

According to yet another aspect of the present invention, the protic solvent may be an alcohol.

According to yet another aspect of the present invention, the moisture control step may be carried out by any one method of an adsorbent method, a membrane method, an electrolysis method, or a heating distillation method.

According to yet another aspect of the present invention, the step of preparing the precursor solution may include: a first solution preparation step of stirring a first precursor including lithium, phosphorus, and sulfur and the first solvent; a second solution preparation step of stirring a second precursor including a halogen and the second solvent; and a step of mixing the first solution and the second solution to prepare the precursor solution.

According to yet another aspect of the present invention, the first solvent may be configured to produce a seed precipitate formed by a liquid phase reaction of the first precursor, and the second solvent may be configured to dissolve the seed precipitate formed by the liquid phase reaction of the first precursor.

According to yet another aspect of the present invention, the powder synthesis step may include: an atomizing step of atomizing droplets; a transporting step of transporting the droplets to a heating furnace; and a pyrolytic synthesis step of inducing a reaction of the transported droplets within the heating furnace to synthesize electrolyte powder.

According to yet another aspect of the present invention, the atomizing step may be carried out using an ultrasonic atomizer.

According to yet another aspect of the present invention, the transporting step may include a step of transporting the droplets using an inert gas as a carrier gas.

According to yet another aspect of the present invention, in the pyrolytic synthesis step, the synthesized electrolyte powder may be amorphous or crystalline.

[Advantageous Effects]

According to one of the above-described technical solutions of the present invention, the method of preparing a sulfide electrolyte according to one embodiment of the present invention is configured to prepare a precursor solution using a solvent with a controlled moisture content. Accordingly, the formation and dissolution of precipitates within the solvent can be facilitated, thereby increasing powder yield. Furthermore, problems such as moisture-induced decomposition of the composition or the generation of impurities due to residual substances are resolved, thereby improving the crystallinity of the powder and enhancing ionic conductivity.

According to one of the above-described technical solutions of the present invention, the method of preparing a sulfide electrolyte according to one embodiment of the present invention is configured to control the moisture content of an aprotic solvent. In this case, as the moisture content in the aprotic solvent decreases, seeds are formed more readily from the precursor in the precursor solution, thereby reducing residual precursors and minimizing the generation of impurities. Consequently, a sulfide electrolyte with improved powder crystallinity and high ionic conductivity can be provided.

According to one of the above-described technical solutions of the present invention, the method of preparing a sulfide electrolyte according to one embodiment of the present invention is configured to control the moisture content of a protic solvent. In this case, as the moisture content in the protic solvent decreases, the seed dissolves well in the precursor solution, thereby reducing residual precipitates and minimizing the generation of impurities due to the residual precipitates. Consequently, the powder yield of the sulfide electrolyte increases, and a sulfide electrolyte with low impurity content and high ionic conductivity can be provided.

The effects achieved by the present invention are not limited to the above-mentioned effects, and other effects that are not mentioned will be readily apparent to those skilled in the art from the following description.

[Description of Drawings]

FIG. 1 shows a flowchart illustrating a method of preparing a sulfide electrolyte according to one embodiment of the present invention.
FIG. 2 shows a conceptual diagram illustrating the method of preparing the sulfide electrolyte of FIG. 1.
FIG. 3 shows an X-ray diffraction (XRD) image of a sulfide electrolyte prepared according to the embodiments of the present invention.

[Modes of the Invention]

Hereinafter, with reference to the attached drawings, embodiments of the present invention are described in detail so that those skilled in the art may easily implement them. However, the present invention may be implemented in various different forms and is not limited to the embodiments described herein. In the drawings, irrelevant parts have been omitted for clarity of description, and similar reference numerals have been used throughout the specification to indicate similar elements.

Throughout the specification, when a part is said to be "connected" to another part, this includes not only "directly connected" but also "indirectly connected" with other elements or components interposed therebetween. In addition, when a part is said to "include" a component, this does not exclude other components, but rather includes other components, unless otherwise specifically stated.

The present invention will be described in detail with reference to the attached drawings below.

The method of preparing a sulfide electrolyte of the present invention is a method for preparing a sulfide solid electrolyte for increasing the energy density and safety of a lithium ion secondary battery, and the present invention discloses a method of preparing a sulfide electrolyte having a low impurity content and high ionic conductivity.

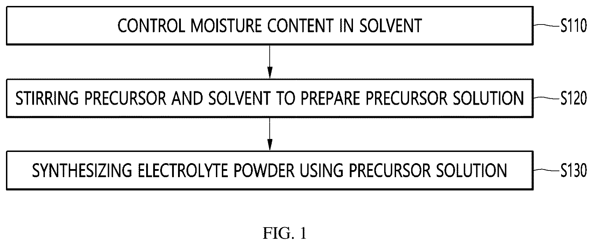

FIG. 1 shows a flowchart illustrating a method of preparing a sulfide electrolyte according to one embodiment of the present invention.

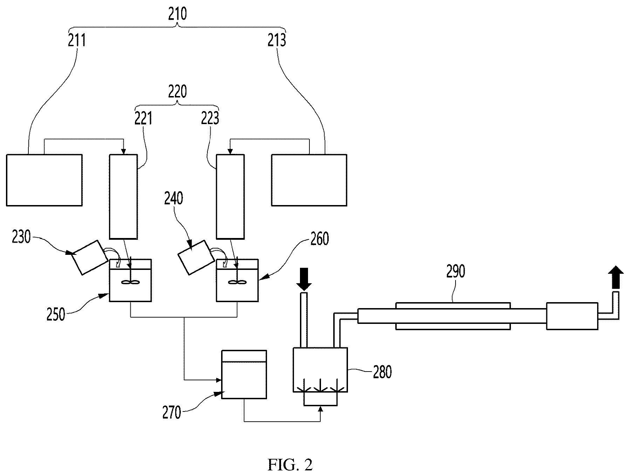

FIG. 2 shows a conceptual diagram illustrating the method of preparing the sulfide electrolyte of FIG. 1.

Referring to FIG. 1, the method of preparing a sulfide electrolyte of the present invention controls the moisture content in a solvent (S110).

A moisture control step is a step in which the moisture content in the solvent is removed to a certain level through solvent purification.

The solvent used in the moisture control step is a solvent capable of reacting with a precursor to initiate a liquid-phase reaction to prepare a sulfide-based all-solid-state electrolyte, and either an aprotic solvent or a protic solvent may be used. Other solvents include chemical solutions used in the battery or electronics industries and electrolytes for lithium-ion batteries.

Aprotic solvents are solvents that accept protons and solvate them, or conversely, donate protons without forming anions.

The aprotic solvent may include at least one selected from the group consisting of acetonitrile, tetrahydrofuran, hexane, acetone, dimethyl ether, and ethyl acetate, and preferably, acetonitrile, tetrahydrofuran, and ethyl acetate may be used.

Protic solvents are solvents capable of donating protons.

The protic solvent may be selected from alcohols, preferably ethanol or methanol.

The solvents in the present invention may be used alone or in a form including two or more types of solvents. For example, both protic solvents and aprotic solvents may be used, and the following description will be based on the case where two types of solvents are used.

Referring to FIG. 2, the first solvent and the second solvent are each stored in a solvent storage tank 210, and their moisture content is controlled through a solvent purification device 220.

The solvent storage tank 210 is a tank capable of storing solvents prior to purification and is preferably a sealed container.

A plurality of solvent storage tanks 210 may be provided, depending on the combination and number of solvents to be used. For example, a solvent storage tank for a first solvent may be used solely for an aprotic solvent or may contain one or more other solvents. A solvent storage tank for a second solvent may be used solely for a protic solvent or may contain one or more other solvents.

The solvent storage tank 210 is connected to the solvent purification device 220. The solvent stored in the solvent storage tank 210 may be subjected to moisture control through the solvent purification device 220 connected to the solvent storage tank 210. For example, a first solvent storage tank 211 storing a first solvent may be connected to a first solvent purification device 221, and a second solvent storage tank 213 storing a second solvent may be connected to a second solvent purification device 223. However, the present invention is not limited thereto, and the first solvent storage tank 211 and the second solvent storage tank 213 may be connected to a single solvent purification device 220. In this case, solvent purification of the first solvent and the second solvent may be performed in a single solvent purification device 220, and a separate purging step using an inert gas or the like may be performed at different times to prevent the solvents from mixing.

The moisture content of the solvent in the solvent storage tank 210 may be controlled to a specific content level through the solvent purification device 220.

The solvent purification device 220 is a device capable of controlling the moisture content of a solvent to a specific level, and a solvent purification device 220 employing an adsorbent method, a membrane method, an electrolysis method, or a heating distillation method may be used.

For example, the solvent purification device 220 may be a solvent purification device 220 employing a heating distillation method. The heating distillation method utilizes differences in boiling points to remove moisture from the solvent. While the method may simultaneously remove impurities and moisture, there is a disadvantage that a significant amount of time is required to remove moisture. Furthermore, the heating distillation method requires the use of a suitable desiccant.

In addition, the solvent purification device 220 may be a solvent purification device 220 employing a membrane method. The membrane method purifies the solvent through a membrane and may include some adsorbents in the membrane. In addition, the membrane method may be effective in separating hydrocarbons or polar and non-polar organic solvents.

In addition, the solvent purification device 220 may be a solvent purification device 220 employing an adsorbent method. The adsorbent method uses an adsorbent to adsorb residual moisture and impurities in a solvent. A column is filled with an adsorbent, and then the solvent in the solvent storage tank 210 passes through the column under the pressure of an inert gas.

In this case, a plurality of columns may be used, and the columns may be connected in series. By the time the solvent reaches the final column, the solvent may be sufficiently filtered.

As adsorbents, molecular sieves, activated alumina, silica gel, or copper catalysts may be used.

As an example, a moisture control method using an adsorbent is carried out by passing a solvent to be controlled through a first column filled with activated alumina and a second column filled with activated alumina and a copper catalyst. The first column may filter out polar impurities such as moisture and peroxides, and the second column may remove residual oxygen in the ppm range.

In some embodiments, in addition to the moisture content within the solvent, polar impurities such as peroxides or oxygen may be additionally removed during moisture control through the above-described moisture control step.

When both an aprotic solvent and a protic solvent are used as solvents, the moisture control step may be carried out for each solvent separately and may include a first moisture control step and a second moisture control step.

For example, the first moisture control step may include controlling the moisture content within a first solvent containing an aprotic solvent.

In the first moisture control step, the moisture content within the first solvent may be controlled to 135 ppm or less.

In this case, when the moisture content is controlled to a moisture content higher than 135 ppm in the first moisture control step, due to the increased moisture content in the aprotic solvent, sulfide precipitates do not form well. Moreover, the moisture may partially decompose the sulfide electrolyte composition, leading to the precipitation of impurities and affecting the crystallinity of the final solid electrolyte powder, thereby making it difficult for the powder to form a spherical shape and resulting in lower ionic conductivity.

The first moisture control step may be carried out for an appropriate time so that the moisture content of the first solvent is controlled to 135 ppm or less. For example, the first moisture control step may be carried out for 1 to 24 hours.

In this case, when moisture control is performed for less than one hour in the first moisture control step, it is difficult to expect an improvement in ionic conductivity through moisture control, as moisture control is not performed for a sufficient time. In addition, when moisture control is performed for more than 24 hours in the first moisture control step, problems such as solvent evaporation or the introduction of impurities during the solvent purification process may occur.

In addition, the second moisture control step may include a step of controlling moisture within a second solvent including a protic solvent.

In the second moisture control step, the moisture content in the second solvent may be controlled to 35 ppm or less.

In this case, when the moisture content is controlled to a moisture content higher than 35 ppm in the second moisture control step, the moisture content in the protic solvent increases, resulting in some of the sulfide precipitates not dissolving in the protic solvent. This reduces the yield of the sulfide electrolyte powder. Furthermore, the compositional decomposition of the residual precipitates and moisture may generate impurities, thereby lowering the ionic conductivity of the final solid electrolyte.

The second moisture control step may be carried out for an appropriate amount of time to ensure that the moisture content of the second solvent is 35 ppm or less. For example, the first moisture control step may be carried out for 1 to 24 hours.

In this case, when the second moisture control step is carried out for less than one hour, the moisture control will not be sufficiently long, making it difficult to expect improved ionic conductivity through moisture control. Moreover, when the second moisture control step is carried out for more than 24 hours, problems such as solvent evaporation or the introduction of impurities during the solvent purification process may occur.

Referring to FIG. 1 again, the method of preparing the sulfide electrolyte of the present invention involves mixing a precursor and a solvent to prepare a precursor solution (S120).

The step of preparing the precursor solution may include a step of preparing a first solution, a step of preparing a second solution, and a step of mixing the first solution and the second solution.

Referring to FIG. 2, an aprotic solvent that has passed through the solvent purification device 220 and a first precursor 230 are stirred to produce a first solution 250.

As the first precursor 230, any compound including lithium, phosphorus, and sulfur and capable of forming a matrix (hereinafter referred to as a "seed") of an argyrodite structure may be used.

The aprotic solvent functions as a matrix that provides an environment facilitating the formation of seeds through a liquid-phase reaction in the first solution 250.

The stirring of the first precursor 230 and the aprotic solvent may be performed within the first solution 250 in appropriate temperature and time ranges that allow a liquid-phase reaction of the precursor and seed formation.

In the first solution 250, the first precursor 230 may be added at an appropriate concentration that allows seed formation and avoids the generation of droplets due to seed precipitation.

The preparation of the first solution 250 may be performed using various stirring devices capable of stirring under the above-described conditions. For example, a heating stirrer such as a hot plate may be used.

Referring to FIG. 2, a protic solvent that has passed through the solvent purification device 220 and a second precursor 240 are stirred to produce a second solution 260.

The second precursor 240 is a compound including a halogen element, and for example, LiF, LiCl, LiBr, or LiI may be used. However, the second precursor is not limited thereto, and any compound including a halogen element capable of reacting with the seed formed in the first solution 250 to form a sulfide electrolyte may be used.

The protic solvent serves to dissolve the second precursor 240 and the seeds produced from the first solution 250.

The stirring of the second precursor 240 and the protic solvent may be performed within the second solution 260 in appropriate temperature and time ranges that allow sufficient dissolution of the second precursor 240 in the protic solvent.

The preparation of the second solution 260 may be performed using various stirring devices capable of stirring under the above-described conditions. For example, the second precursor 240 and the protic solvent may be uniformly stirred and mixed using a stirrer.

In the second solution 260, the second precursor 240 may form powder particles and may be added at an appropriate concentration to prevent the formation of droplets due to precipitates.

Referring to FIG. 2, the first solution 250 and the second solution 260 are mixed to prepare a precursor solution 270.

The method of mixing the first solution 250 and the second solution 260 may include all possible mixing methods under the above-described conditions.

Referring to FIG. 1, the method of preparing the sulfide electrolyte of the present invention involves synthesizing electrolyte powder using a precursor solution (S130).

The powder synthesis step includes an atomizing step of atomizing droplets, a transport step of transporting the droplets to a heating furnace, and a thermal decomposition step of thermally decomposing the transported droplets within the heating furnace.

Referring to FIG. 2, droplets are generated from the precursor solution 270 using an ultrasonic atomizer 280.

The droplets are droplets of a mixed solution containing seeds of a sulfide solid electrolyte and may have a size ranging from 0.1 $\mu$m to 100 $\mu$m.

The droplets may be generated using various devices capable of generating and atomizing droplets having a size ranging from 0.1 $\mu$m to 100 $\mu$m. For example, the droplets may be generated using an ultrasonic atomizer 280. In this case, ultrasonic atomization may be performed at a frequency ranging from 1.7 MHz to 2.4 MHz.

When a heating furnace 290 reaches a preset temperature, the precursor solution 270 may be formed into droplets from the ultrasonic atomizer 280.

Ultrasonic atomization is advantageous for producing fine droplets and particles with a narrow droplet size distribution through ultrasonic vibration. Ultrasonic atomization may also enhance the dispersion stability of the produced droplets. Since each particle is produced from a single droplet, the droplet size is uniform so that particles with a uniform size and composition can be prepared.

Thereafter, the droplets produced from the precursor solution 270 are transported to the heating furnace 290.

A carrier gas may be used when the droplets are transported to the heating furnace 290.

As the carrier gas, an inert gas may be used, and preferably, argon (Ar) or nitrogen ($N_2$) may be used. By using an inert gas as the carrier gas, chemical stability may be improved.

Thereafter, the droplets transported to the heating furnace 290 are thermally decomposed to produce sulfide electrolyte powder.

The heating furnace 290 may be made of heat-resistant quartz, alumina, or stainless steel (SUS).

Thereafter, the sulfide electrolyte produced in the heating furnace 290 is dried as it passes through the heating furnace 290 and collected in a solid powder form in a powder collector.

The powder preferably has an argyrodite phase, but an additional heat treatment process may be added after the process to increase the crystallinity of the powder.

As described above, the method of preparing the sulfide electrolyte of the present invention is configured to prepare a precursor solution using a solvent with a controlled moisture content. Since the method of preparing the sulfide electrolyte of the present invention uses a solvent with a controlled moisture content, precipitates can be easily formed and dissolved within the solvent, thereby increasing the powder yield. Furthermore, problems such as moisture-induced decomposition of the composition or the generation of impurities due to residual substances are resolved, thereby improving the crystallinity of the powder and enhancing ionic conductivity.

Furthermore, the method of preparing the sulfide electrolyte of the present invention is configured to control the moisture content of the aprotic solvent. As the moisture content in the aprotic solvent decreases, seeds are formed more readily from the precursor in the precursor solution, thereby reducing the residual precursor and minimizing the generation of impurities. Consequently, a sulfide electrolyte with improved powder crystallinity and high ionic conductivity can be provided. When the moisture content is not controlled, some of the composition may decompose due to moisture, or impurities from the residual precursor may result in reduced crystallinity of the final powder, resulting in low ionic conductivity.

In addition, the method of preparing the sulfide electrolyte of the present invention is configured to control the moisture content of the protic solvent. As the moisture content in the protic solvent decreases, seeds dissolve well in the precursor solution, thereby reducing residual precipitates. This minimizes the generation of impurities due to residual precipitates. Consequently, the powder yield of the sulfide electrolyte is increased, and a sulfide electrolyte with low impurity content and high ionic conductivity can be provided.

Hereinafter, a method of preparing a sulfide electrolyte according to a preferred embodiment of the present invention will be described in more detail.

### <Preparation Example 1 - Preparation of purification solvents>

First, an aprotic solvent and a protic solvent were used to prepare a sulfide electrolyte. Ethyl acetate was selected as the aprotic solvent, and ethanol was selected as the protic solvent. The moisture content of both solvents was purified using an adsorbent method. Specifically, the solvent to be moisture-controlled was passed through a first column filled with activated alumina and a second column filled with activated alumina and a copper catalyst.

The solvent samples of Comparative Examples 1 to 6, shown in [Table 1] below, were prepared with varying degrees of moisture purification for the two above-described solvents. Specifically, in Comparative Example 1, no moisture control was performed for any solvent. In Examples 1, 3, 4, and 5, the moisture control levels were set to 5 ppm, 30 ppm, 60 ppm, and 130 ppm for both solvents, respectively. Examples 2 and 6 were compared with Example 1 by controlling the moisture content to be under 5 ppm only for the aprotic solvent or the protic solvent, respectively.

[Table 1]

| | | Comparative Example 1 | Example 1 | Example 2 | Example 3 | Example 4 | Example 5 | Example 6 |
|---|---|---|---|---|---|---|---|---|
| Control level (ppm) | | - | 5 | 5 | 30 | 60 | 130 | 5 |
| Moisture content (ppm) | Aprotic solvent | 192.75 | **2.7** | **3.04** | **31.13** | **62.24** | **131.33** | 189.17 |
| | Protic solvent | 43.62 | **3.82** | 43.2 | **30.62** | **20.19** | **10.75** | **3.68** |
| Whether solvent control is performed | Aprotic solvent | X | O | O | O | O | O | X |
| | Protic solvent | X | O | X | O | O | O | O̅ |

### <Preparation Example 2 - Preparation of precursor solutions>

After the solvent moisture control step, a first precursor, selected from $Li_2S$ and $P_2S_5$, was stirred with an aprotic solvent with a controlled moisture content to prepare a first solution. A second precursor, selected from $Li_2S$ and LiCl, was stirred with a protic solvent with a controlled moisture content to prepare a second solution. Thereafter, the first solution and the second solution were mixed to prepare a precursor solution.

Detailed preparation conditions are shown in [Table 2] below.

[Table 2]

| Common conditions | | First solution | | Second solution | |
|---|---|---|---|---|---|
| Precursor | Type | $Li_2S$ | $P_2S_5$ | $Li_2S$ | LiCl |
| | Amount (g) | 3.4497 | 5.6129 | 1.7248 | 2.6502 |
| Solvent | Type | Ethyl acetate | | Ethanol | |

**<Preparation Example 3 - Preparation of electrolyte powder>**

Sulfide electrolyte powders were prepared by atomizing and heating the precursor solutions according to Comparative Example 1 and Examples 1 to 6 under the process conditions shown in [Table 3] below.

[Table 3]

| Common conditions | | Mixed solution |
|---|---|---|
| Heating furnace | Temperature | 200 to 300 °C |
| Carrier gas | Type | Nitrogen ($N_2$) or argon (Ar) |
| | Flow rate | 5 to 20 L/min |

**<Experimental Example 1 - X-ray diffraction (XRD) measurement>**

XRD analysis was performed to compare the particle structures of the sulfide electrolyte powders prepared according to Comparative Example 1 and Examples 1 to 6.

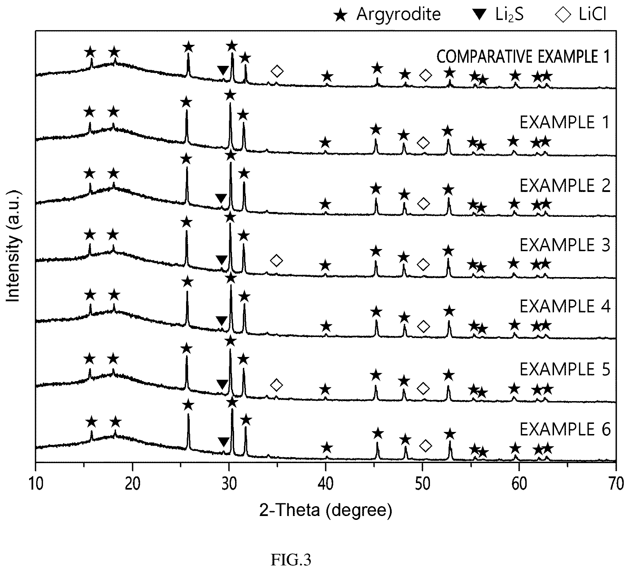

FIG. 3 shows XRD images of sulfide electrolytes prepared according to embodiments of the present invention.
As can be seen from FIG. 3, compounds with an argyrodite structure were detected in all of Comparative Example 1 and Examples 1 to 6, indicating that sulfide electrolyte powder particles were successfully obtained. Comparative Example 1 exhibited a relatively lower peak compared to Examples 1 to 6. This suggests that some components of the sulfide electrolyte were decomposed by moisture in the solvent of Comparative Example 1, affecting the crystallinity of the sulfide electrolyte. Notably, $Li_2S$ was not detected in Example 1, suggesting that since the moisture content in the solvent in Example 1 was controlled to 5 ppm or less, the seeds were well formed and dissolved in the precursor solution, thus solving the problem of compositional decomposition or residual precipitates, and minimizing the generation of impurities.

**<Experimental Example 2 - Ionic conductivity measurement>**

Ionic conductivity was measured to compare the ionic conductivity of the sulfide electrolyte powders prepared in Comparative Example 1 and Examples 1 to 6.
Electrochemical impedance spectra (EIS) were measured to evaluate ionic conductivity. EIS were measured using an AC impedance spectroscopy device (Biologic SP-300). In this case, measurements were performed at a frequency of 1 Hz to 7 MHz and an AC amplitude of 20 mV. The measured impedance values were converted to ionic conductivity values using an EIS analysis method, a Nyquist plot, and an equivalent circuit. Specifically, the bulk resistance value obtained from plotting was used to measure the dimensions of the lithium phosphorus sulfur chloride (LPSCl) pellets prepared using a pressurized cell, and the following relationship was used to measure ionic conductivity.

$$\sigma = t/(A*R)$$

Here, $\sigma$ represents ionic conductivity, t represents pellet thickness, R represents ionic resistance, and A represents pellet area.
[Table 4] shows the ionic conductivity measurements of the sulfide electrolytes prepared according to embodiments of the present invention.

[Table 4]

| | | Comparative Example 1 | Example 1 | Example 2 | Example 3 | Example 4 | Example 5 | Example 6 |
|---|---|---|---|---|---|---|---|---|
| Control level (ppm) | | - | 5 | 5 | 30 | 60 | 130 | 5 |
| Moisture content (ppm) | Aprotic solvent | 192.75 | **2.7** | **3.04** | **31.13** | **62.24** | **131.33** | 189.17 |
| | Protic solvent | 43.62 | **3.82** | 43.2 | **30.62** | **20.19** | **10.75** | **3.68** |

(continued)

| | | Comparative Example 1 | Example 1 | Example 2 | Example 3 | Example 4 | Example 5 | Example 6 |
|---|---|---|---|---|---|---|---|---|
| Whether solvent control is performed | Aprotic solvent | X | O | O | O | O | O | X |
| | Protic solvent | X | O | X | O | O | O | O |
| Ionic conductivity (mS/cm) | | 2.67 | 3.82 | 3.12 | 3.04 | 3.12 | 2.95 | 2.95 |

As can be seen in [Table 4], Examples 1 to 6 all exhibit an excellent ionic conductivity of 2.95 mS/cm or higher. Notably, Example 1, where the moisture content in the solvent was controlled to 5 ppm or less in both aprotic and protic solvents, exhibited the highest ionic conductivity of 3.82 mS/cm.

Comparing Example 2, where the moisture content in the aprotic solvent was controlled, Example 6, where the moisture content in the protic solvent was controlled, and Comparative Example 1, where the moisture content in the solvents was not controlled, reveals that when the moisture content in the solvents was controlled, fewer impurities were generated in the precursor solution and the ionic conductivity of the sulfide electrolyte increased. Furthermore, it was confirmed that controlling the moisture content in the aprotic solvent increased ionic conductivity more than controlling the moisture content in the protic solvent. Considering the functions of each solvent, compared to the effect of preventing residual precipitates through moisture control in the protic solvent, the effect of preventing residual precursors through moisture control in the aprotic solvent, which allows effective control of impurities, had a greater impact on the ionic conductivity of the sulfide electrolytes.

The scope of the present invention is defined by the claims below rather than the detailed description above, and all changes or modifications derived from the meaning and scope of the claims and their equivalents should be construed as being included within the scope of the present invention.

[Industrial Applicability]

The present invention, as a method of preparing a sulfide electrolyte, can be widely utilized in industries utilizing secondary batteries. For example, the present invention can be widely used not only in small electronic devices but also in medium- to large-sized devices such as electric vehicles, and can be applied to diverse fields such as home appliances, medical devices, robots, aerospace, energy storage systems, wearable devices, and IoT devices.

**Claims**

1.    A method of preparing a sulfide electrolyte, comprising:

a moisture control step of controlling a moisture content in a solvent;
a step of preparing a precursor solution by stirring a precursor and the solvent with the controlled moisture content; and
a powder synthesis step of synthesizing electrolyte powder using the precursor solution.

2.    The method of claim 1, wherein the moisture control step includes:

a first moisture control step of controlling moisture in a first solvent including an aprotic solvent; and
a second moisture control step of controlling moisture in a second solvent including a protic solvent.

3.    The method of claim 2, wherein, in the first moisture control step, the moisture content in the first solvent is controlled to 135 ppm or less.

4.    The method of claim 2, wherein, in the second moisture control step, the moisture content in the second solvent is controlled to 35 ppm or less.

5.    The method of claim 2, wherein the aprotic solvent includes at least one selected from the group consisting of acetonitrile, tetrahydrofuran, hexane, acetone, dimethyl ether, and ethyl acetate.

**6.** The method of claim 2, wherein the protic solvent is an alcohol.

**7.** The method of claim 1, wherein the moisture control step is carried out by any one method of an adsorbent method, a membrane method, an electrolysis method, or a heating distillation method.

**8.** The method of claim 2, wherein the step of preparing the precursor solution includes:

a first solution preparation step of stirring a first precursor including lithium, phosphorus, and sulfur and the first solvent;

a second solution preparation step of stirring a second precursor including a halogen and the second solvent; and

a step of mixing the first solution and the second solution to prepare the precursor solution.

**9.** The method of claim 8, wherein the first solvent is configured to produce a seed precipitate formed by a liquid phase reaction of the first precursor, and the second solvent is configured to dissolve the seed precipitate formed by the liquid phase reaction of the first precursor.

**10.** The method of claim 1, wherein the powder synthesis step includes:

a atomizing step of atomizing droplets;

a transporting step of transporting the droplets to a heating furnace; and

a pyrolytic synthesis step of inducing a reaction of the transported droplets within the heating furnace to synthesize electrolyte powder.

**11.** The method of claim 10, wherein the atomizing step is carried out using an ultrasonic atomizer.

**12.** The method of claim 10, wherein the transporting step includes a step of transporting the droplets using an inert gas as a carrier gas.

**13.** The method of claim 10, wherein, in the pyrolytic synthesis step, the synthesized electrolyte powder is amorphous or crystalline.

| CONTROL MOISTURE CONTENT IN SOLVENT | ─S110 |

↓

| STIRRING PRECURSOR AND SOLVENT TO PREPARE PRECURSOR SOLUTION | ─S120 |

↓

| SYNTHESIZING ELECTROLYTE POWDER USING PRECURSOR SOLUTION | ─S130 |

FIG. 1

FIG. 2

FIG.3

## INTERNATIONAL SEARCH REPORT

| International application No. |
| --- |
| **PCT/KR2025/004526** |

**A.    CLASSIFICATION OF SUBJECT MATTER**

**H01M 10/0562**(2010.01)i; **H01M 10/0569**(2010.01)i; **C01B 25/14**(2006.01)i; **C01B 17/20**(2006.01)i

According to International Patent Classification (IPC) or to both national classification and IPC

**B.    FIELDS SEARCHED**

Minimum documentation searched (classification system followed by classification symbols)

H01M 10/0562(2010.01); H01B 13/00(2006.01); H01M 10/052(2010.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 황화물 전해질 (sulfide electrolyte), 수분 (moisture), 비양성자성 용매 (aprotic solvent), 양성자성 용매 (protic solvent), 분무 (spraying), 액적 (droplet)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2024-0044130 A (TECH UNIVERSITY OF KOREA INDUSTRY ACADEMIC COOPERATION FOUNDATION) 04 April 2024 (2024-04-04)<br>claims 7, 8; paragraphs [0079]-[0081], [0084], [0086], [0092], [0098], [0115]-[0121]; figure 1 | 1-13 |
| Y | JP 2007-042581 A (FUJIFILM HOLDINGS CORP.) 15 February 2007 (2007-02-15)<br>claims 1-5; paragraphs [0011], [0071], [0072], [0143] | 1-13 |
| Y | KR 10-2024-0084732 A (KOREA INSTITUTE OF CERAMIC ENGINEERING AND TECHNOLOGY) 14 June 2024 (2024-06-14)<br>claims 1, 10, 11, 13; paragraphs [0068], [0070], [0074], [0101]-[0110] | 10-13 |
| A | KR 10-2022-0057051 A (KOREA ELECTROTECHNOLOGY RESEARCH INSTITUTE) 09 May 2022 (2022-05-09)<br>abstract; claims 1-12 | 1-13 |

☑ Further documents are listed in the continuation of Box C.   ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **11 July 2025** | **14 July 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/004526**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2020-0065363 A (HYUNDAI MOTOR COMPANY et al.) 09 June 2020 (2020-06-09) abstract; claims 1-20 | 1-13 |

Form PCT/ISA/210 (second sheet) (July 2022)

## INTERNATIONAL SEARCH REPORT
### Information on patent family members

International application No.

**PCT/KR2025/004526**

| Patent document cited in search report | | | Publication date (day/month/year) | Patent family member(s) | | | Publication date (day/month/year) |
|---|---|---|---|---|---|---|---|
| KR | 10-2024-0044130 | A | 04 April 2024 | None | | | |
| JP | 2007-042581 | A | 15 February 2007 | None | | | |
| KR | 10-2024-0084732 | A | 14 June 2024 | KR | 10-2823929 | B1 | 23 June 2025 |
| KR | 10-2022-0057051 | A | 09 May 2022 | None | | | |
| KR | 10-2020-0065363 | A | 09 June 2020 | CN | 111261933 | A | 09 June 2020 |
| | | | | CN | 111261933 | B | 10 January 2025 |
| | | | | KR | 10-2673003 | B1 | 05 June 2024 |
| | | | | US | 10991977 | B2 | 27 April 2021 |
| | | | | US | 2020-0176814 | A1 | 04 June 2020 |

Form PCT/ISA/210 (patent family annex) (July 2022)